# EUROPEAN PATENT APPLICATION

(11) **EP 0 943 995 A2**
(43) Date of publication of application: **22.09.1999**
(21) Application number: 99200816.9
(22) Date of filing: 17.03.1999
(51) Int. Cl.: G06F 11/00

(54) **Processor having real-time external instruction insertion for debug functions without a debug monitor**

(30) Priority: 20.03.1998 US 78786
(71) Applicant: TEXAS INSTRUMENTS INCORPORATED, Dallas, TX 75265 (US)
(72) Inventor: Matt, David R., Missouri City, TX 77459 (US); Swoboda, Gary L., Sugarland, TX 77479 (US)
(74) Representative: Holt, Michael

(57) **Abstract**

A processor (16) is disclosed that has real-time external instruction insertion for debug functions. The processor (16) includes processor circuitry operable to execute embedded code (19) and debug circuitry interfacing with the processor circuitry that is operable to communicate with a debug host (12). The processor circuitry includes execution control logic (60) operable to select instructions for processor decode (62) and execution by the processor circuitry. The debug circuitry includes a register (30) connected to the execution control logic (60) as a source of instructions. The execution control logic (60) has an arbitration scheme for selecting between the register (30) in the debug circuitry and other instruction sources such that the register (30) in the debug circuitry allows external instruction insertion for execution by the processor circuitry. In one embodiment, the other instruction sources include a fetch queue (68), an interrupt register (64), and a pipeline protection register (66). Also in this embodiment, the arbitration scheme can allow debug instructions to be preemptive or non-preemptive.

## Description

### TECHNICAL FIELD OF THE INVENTION

This invention relates in general to the field of embedded processors and, more particularly, to a processor having real-time external instruction insertion for debug functions without a debug monitor.

### BACKGROUND OF THE INVENTION

Embedded processors are widely used in a variety of applications and generally include processor circuitry that executes embedded code to perform desired functions. One type of embedded processor is a microcontroller which can be used, for example, to control the operation of a device, such as a motor. Another type of embedded processor is a digital signal processor (DSP) which can be used, for example, in a variety of communications products, such as cellular phones. The use of an embedded processor to perform desired functions generally requires the development and debug of the embedded code. In many applications, the embedded code includes foreground code for performing time critical tasks and background code for performing administrative or higher level tasks.

For certain applications, it can be particularly important to be able to debug the embedded code using real-time execution control. It can also be important to provide for real-time debug access to registers and memory in an embedded processor without using a debug monitor and without stopping the processor. Real-time execution control allows for the suspension of the embedded processor's execution of a given task while still allowing the processor to continue to service other, time critical tasks. Thus, real-time execution control allows the user of processor development and debug tools to interactively control the execution of embedded code within the system without necessarily interfering with the processor's ability to perform time critical tasks. For example, if embedded code is being debugged in a processor used to control a hard disk drive motor, the processor should not be allowed to stop controlling that motor. Otherwise, the motor may go out of control and destroy the hard disk drive. Thus, it is important to allow the processor to continue to execute the time critical task of controlling the motor while the embedded instruction code is being debugged.

One conventional execution control method is to stop all processor execution upon a break event and not allow for any interrupts to be processed until execution resumes. This approach is taken in stop mode emulation schemes used in some processors. However, this does not allow for controlling the processor's execution in a real-time, embedded system.

Another conventional method is to have a break event trigger a special interrupt which causes the processor to execute an interrupt service routine in which the processor waits for either a command to resume execution or for an enabled, time critical interrupt to occur. This type of interrupt service routine is often referred to as a "debug monitor." Thus, the debug monitor is implemented by code executed by the embedded processor after being placed in a debug state. This debug monitor approach provides a form of execution control and is used in some processors in addition to the use of stop mode emulation schemes.

In this debug monitor method, the special interrupt service routine typically communicates to a debug host through scanable registers. The debug host scans in commands and scans out results. When halted, the processor is actually inside the debug monitor, servicing time critical interrupt service routines while performing commands. Consequently, the debug monitor scheme suffers from problems in that it uses system resources such as program and data memory. In general, on chip memory is very expensive and possibly can be corrupted by the debug monitor. Further, performance overhead due to saving and restoring context is experienced as the debug monitor is entered and exited and time critical interrupts generally have to be blocked during this time period.

### SUMMARY OF THE INVENTION

In accordance with the present invention, a processor having real-time external instruction insertion for debug functions is disclosed that provides advantages over prior processor debug schemes.

According to one aspect of the present invention, the processor includes processor circuitry operable to execute embedded code and debug circuitry interfacing with the processor circuitry that is operable to communicate with a debug host. The processor circuitry includes execution control logic operable to select instructions for processor decode and execution by the processor circuitry. The debug circuitry includes a register connected to the execution control logic as a source of instructions. The execution control logic has an arbitration scheme for selecting between the register in the debug circuitry and other instruction sources such that the register in the debug circuitry allows external instruction insertion for execution by the processor circuitry. In one embodiment, the other instruction sources include a fetch queue, an interrupt register, and a pipeline protection register. Also in this embodiment, the arbitration scheme can allow debug instructions to be preemptive or non-preemptive.

A technical advantage of the present invention is allowing external instruction insertion without the use of a debug monitor. The elimination of the code and performance overhead of the debug monitor provides advantages including eliminating the code for the debug monitor, the use of processor resources for holding data during execution of the debug monitor, the relatively lengthy delay between a break event and the ability to service time-critical interrupts, and the development time in creating the debug monitor.

Another technological advantage of the present invention is the extension of access to internal registers to be used for the insertion of instructions. This mechanism is included as part of the processor and provides an alternative instruction source.

Further technical advantages of the present invention should be apparent from the drawings, description and claims.

### BRIEF DESCRIPTION OF THE DRAWINGS

A more complete understanding of the present invention and advantages thereof may be acquired by referring to the following description taken in conjunction with the accompanying drawings, in which like reference numbers indicate like features, and wherein:
FIGURE 1 is a block diagram of one embodiment of a debug environment including a debug host and a target system having an embedded processor;
FIGURE 2 is a block diagram of one embodiment of debug circuitry in the processor of FIGURE 1;
FIGURE 3 is a diagram of the operation of the debug core of FIGURE 2 to allow external instruction insertion.

### DETAILED DESCRIPTION OF THE INVENTION

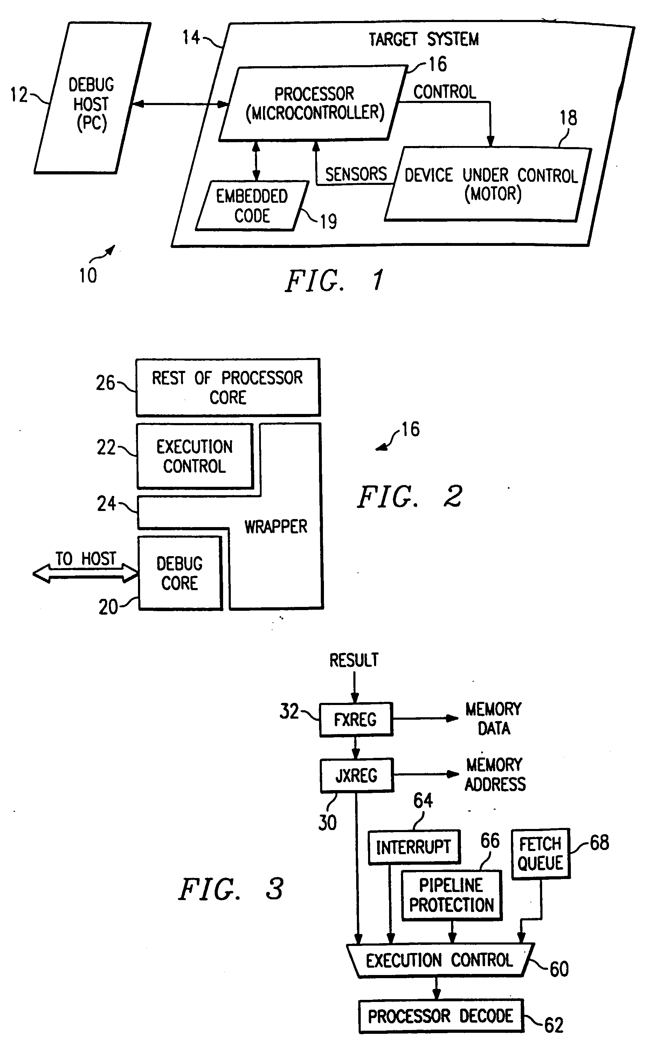

FIGURE 1 is a block diagram of one embodiment of a debug environment, indicated generally at 10, including a debug host 12 and a target system 14. In this embodiment, target system 14 has an embedded processor 16 that provides control signals to and receives sensor signals from a device under control 18. For example, processor 14 can be a microcontroller and device 18 can be a hard disk drive motor. Processor 16 executes embedded code 19 to perform programmed functions. In general, embedded code 19 includes two categories of embedded code: foreground code and background code. The foreground code performs time critical tasks, for example, device control tasks executed at regular intervals to service device 18. The background code performs administrative and higher level tasks, is typically larger in size and is not as time critical.

FIGURE 2 is a block diagram of one embodiment of debug circuitry in processor 16 of FIGURE 1. The debug circuitry includes a debug core 20, execution control 22, and wrapper 24. These components interface with the rest of the processor core 26. Debug core 20 communicates with debug host 12 to receive debug commands and provide results. In one implementation, debug core 20 manages a JTAG TAP state machine for accomplishing communication with debug host 12. Debug core 20 can hold scan registers, contain all TCK logic and manage debug address, data, status and control information. Execution control 22 can then arbitrate between interrupts, instructions and debug and can control suspension and restarting of processor 16. Wrapper 24 can provide an interface for the debug circuitry component to the rest of the processor core 26 and the memory bus.

According to the present invention, the debug circuitry in processor 16 allows debug host 12 to perform real-time execution control for debug functions without using a debug monitor. In general, when processor 16 encounters a break event set by debug host 12 indicating that processor 16 should halt execution of the current task, processor 16 enters a hardware state in which it does not fetch further instructions for the current task. In this state, processor 16 can wait for an external command from debug host 12 indicating that execution can be resumed or for an enabled time critical interrupt request. One example of debug state machines maintained by processor 16 are shown and described in U.S. Provisional Patent Application Serial No. 60/078,785 entitled "Processor Having Real-time Execution Control for Debug Functions Without a Debug Monitor", filed on the 2^{nd} March 1998.

If processor 16 receives a command from debug host 12 indicating that execution should be resumed, processor 16 can resume fetching and executing instructions until another break event is received. Also, processor 16 can be made to execute a single instruction by automatically causing a break event as the first fetched instruction is executed. Further, if an enabled, time critical interrupt is received, processor 16 can execute associated code (typically foreground code as mentioned above) to perform tasks normally associated with servicing that interrupt (e.g., a context save) and can record that it was in a suspended state when the interrupt was taken. After processor 16 has serviced the interrupt and restores the prior context, processor 16 can reenter the suspended state. At this point, processor 16 can resume waiting for a command from debug host 12 to resume execution or for additional enabled, time critical interrupts.

FIGURE 3 is a diagram of the operation of the debug core 20 of FIGURE 2 to allow external instruction insertion. As shown, the data in JXREG register 30 is provided as an input to an execution control 60. Execution control 60 selects the next op-code to be provided to processor decode 62 for execution by the processor. Execution control 60 also receives inputs from an interrupt register 64, a pipeline protection register 66 and a fetch queue 68. In operation, execution control 60 arbitrates between the multiple instruction sources by servicing an instruction from interrupt register 64 as the top priority first. The next priority for service is pipeline protection register 66, followed by fetch queue 68. In this non-preemptive scheme, JXREG register 30 is the last in priority. In addition to being provided to execution control 60, data in JXREG register 30, along with data in FXREG 32, can be provided as a memory address in memory data for access to memory on the processor.

In this manner, it is possible to use JXREG register 30 and FXREG register 32 for external insertion (from the debug host) of an instruction for execution and of an address and data for access to memory. This is accomplished in hardware without the use of a debug monitor. In this embodiment, JXREG register 30 operates as an instruction/address register, and FXREG register 32 operates as a result/data register. These registers can be accessed through a debug mechanism, such as JTAG (IEEE 1149.1) or a serial port.

In one implementation, the external instruction insertion for debug functions can be set to be preemptive rather than non-preemptive. If preemptive, then the inserted instruction from JXREG register 30 has priority over other sources of instructions for execution control 60. If non-preemptive (as mentioned above), then external access is provided only if there is no other activity in the processor (i.e., the other instruction sources are empty). With respect to memory access, preemptive memory access (as opposed to non-preemptive access) can be handled by inserting a preemptive no-op instruction into the instruction stream. The no-op instruction frees the memory for a cycle when it is executed.

As an example, for an inserted debug write to data memory, the debug core can wait for a cycle when the processor is not using the data memory bus. Then the debug core can send out an address and data. These are then multiplexed with the processor's normal write address and data buses. The multiplexer chooses the debug inserted address and data. From the its perspective, the memory simply sees an address and data just as if it were a normal processor access. (If desired, there can be a special core signal to indicate that the access is a debug access in case a memory block or peripheral wants to handle the access differently.) A debug read from data memory can be accomplished similar to writes, except that the data read back is redirected to the debug core.

External access that needs to be performed as part of the debugging process typically includes the ability to read and write: memory and memory mapped peripheral registers, logic that may be connected to memory bus, and processor and system registers not accessible through memory operations but accessible through processor performed instructions. These actions are actions that the processor is capable of performing as part of its normal operation. The real-time external instruction insertion scheme of the present invention provides such access while solving problems with conventional debug schemes. According to the present invention, the processor's normal source of instructions can be supplemented with a source for debug requests to be submitted to the processor. An arbitration mechanism determines which operation the processor will perform at a given time. When the processor performs a debug requested instruction, it can use the separate set of resources provided by the debug core 20 to supply information for that request and in which to store the results. These resources can then be accessed by the debug host.

The processor arbitration mechanism can consider a number of factors in selecting the next instruction to be executed. For example, the arbitration mechanism can consider the following when determining whether to perform a debug request: (1) whether there is a debug request available; (2) whether it is a preemptive request and, if not, whether there the processor resources required are available and whether the request can be performed in parallel with normal instructions; (3) whether debug accesses are enabled by the processor or whether the processor has disabled them; and (4) whether the processor is currently engaged in a time-critical activity. Because of the flexibility of arbitration mechanisms, the processor and embedded code has a great deal of control over when debug accesses are performed. This allows for operation in real time environments. However, the debug system can, in an emergency, be provided with an ability to exercise overriding authority to allow for the debug of a real time system that has gone out of control. Depending on processor architecture and the nature of the debug request, it may be possible to perform the instruction in parallel with normal instructions. If the request cannot be performed in parallel, then the debug request needs to be inserted into the instruction stream without disturbing the program counter and the other aspects of the processor state. This can be treated as a sub-instruction in that it does not advance the program counter.

Providing external instruction insertion as an additional instruction source is different from other real time debug solutions. Conventional solutions trigger a special interrupt that causes the processor to execute a debug monitor. The debug monitor then saves off a portion of the processor resources used by the application and performs the debug request (*i.e.,* reads/writes a memory location register) and then restores the processor resources. This will take a relatively long period of time due to the need to save and restore normal processor resources. Also, system resources such as memory will be required to hold the debug monitor code. Further, these resources need to be protected against corruption or risk loss of debug control.

Although the present invention has been described in detail, it should be understood that various changes, substitutions and alterations can be made thereto without departing from the sphere and scope of the invention as defined by the appended claims.

A method for real-time external instruction insertion for debug functions, comprising:
selecting instructions using execution control logic for a processor decode and execution by processor circuitry;
connecting a register in debug circuitry to the execution control logic as a source of instructions; and
using an arbitration scheme in the execution control logic for selecting between the register in the debug circuitry and other instruction sources;
such that the register in the debug circuitry allows external instruction insertion for execution by the processor circuitry.

The method wherein the other instruction sources comprise a fetch queue.

The method wherein the other instruction sources further comprise an interrupt register.

The method wherein the other instruction sources further comprise a pipeline protection register.

The method wherein using the arbitration scheme includes allowing debug instructions to be preemptive or non-preemptive.

The method wherein, when debug instructions are non-preemptive, using the arbitration scheme includes making the register in the debug circuitry lowest priority.

The method wherein, when debug instructions are preemptive, using the arbitration scheme includes making the register in the debug circuitry highest priority.

The method further comprising connecting the register and a second register in the debug circuitry to allow insertion of an external memory access.

The method further comprising using the debug circuitry to insert a no-op instruction for execution to free a memory cycle for the external memory access.

## Claims

1. A processor having real-time external instruction insertion for debug functions, comprising:
processor circuitry operable to execute embedded code; and
debug circuitry interfacing with the processor circuitry and operable to communicate with a debug host;
the processor circuitry comprising execution control logic operable to select instructions for a processor decode and execution by the processor circuitry;
the debug circuitry comprising a register connected to the execution control logic as a source of instructions;
the execution control logic having an arbitration scheme for selecting between the register in the debug circuitry and other instruction sources;
such that the register in the debug circuitry allows external instruction insertion for execution by the processor circuitry.

2. The processor of Claim 1, wherein the other instruction sources comprise a fetch queue.

3. The processor of Claim 2, wherein the other instruction sources further comprise an interrupt register.

4. The processor of Claim 3, wherein the other instruction sources further comprise a pipeline protection register.

5. The processor of Claim 4, wherein the arbitration scheme allows debug instructions to be preemptive or non-preemptive.

6. The processor of Claim 5, wherein, when debug instructions are non-preemptive, the arbitration scheme makes the register in the debug circuitry lowest priority.

7. The processor of Claim 5, wherein, when debug instructions are preemptive, the arbitration scheme makes the register in the debug circuitry highest priority.

8. The processor of Claim 1, wherein the debug circuitry further comprises a second register, and the register and second register in the debug circuitry allow insertion of an external memory access.

9. The processor of Claim 8, wherein the debug circuitry is use to insert a no-op instruction for execution to free a memory cycle for the external memory access.
